# EUROPEAN PATENT SPECIFICATION

(11) **EP 4 494 317 B1**
(45) Date of publication and mention of the grant of the patent: **31.12.2025**
(21) Application number: 23715575.9
(22) Date of filing: 13.03.2023
(51) Int. Cl.: H04L 12/18

(54) **DATA TRANSMISSION**
DATENÜBERTRAGUNG
TRANSMISSION DE DONNÉES

(30) Priority: 14.03.2022 GB 202203500
(43) Date of publication of application: 22.01.2025
(73) Proprietor: Smarter Technologies Group Limited, Ringwood Hampshire BH24 3FG (GB)
(72) Inventor: WALKER, Matthew, Ringwood, Hampshire BH24 3FG (GB)
(74) Representative: Noble, Frederick
(86) International application number: PCT/GB2023/050583
(87) International publication number: WO 2023/175308

(56) References cited:
- EP-A1- 1 850 533
- CN-A- 115 175 021

## Description

### TECHNICAL FIELD

The present invention relates to a radio system for the transmission of data. The present invention also relates to a data collection device having radio components for radio transmission with one or more gateways. The present invention also relates to a method of transmitting data within a radio system.

### BACKGROUND OF THE INVENTION

In a radio network, it is known to preserve battery life by using a broadcast system, with individual devices on the ground not needing to be aware of the network that surrounds them. Each individual device can power up, transmit a burst of data and then power down; the battery life being extended by the periods during which the device is effectively asleep. Such an approach is known as burst transmission and when a transmission occurs, it is hoped that the message is caught by the surrounding infrastructure.

A problem with burst transmissions is that there is a limit to the length of each transmission due to noise introducing errors and thereby introducing a bit error rate. For many of the transmissions, a relatively small amount of data may be all that is required. However, situations often arise where it becomes desirable to send larger data volumes. In such environments, it is known to include multiple radio systems. However, known systems with this capability, such as conventional cellular telephone systems for example, carry a significant overhead and are generally not capable from deriving power from a self-contained battery system. This restricts mobility, particularly if data transmissions are required over a significant operating period (typically measured in years) before a manual intervention takes place.

EP1850533 discloses data burst communication techniques for mobile communication devices operating in packet data session.

### BRIEF SUMMARY OF THE INVENTION

According to a first aspect of the present invention, there is provided a radio system for the transmission of data, comprising: a plurality of data collection devices; at least one gateway arranged to provide radio communications between said plurality of data collection devices and said at least one gateway; and a control station arranged to provide data communications between said at least one gateway and said control station; wherein: each said data collection device is configured to receive data of a first data type and data of a second data type, wherein the data volume of said second data type is larger than the data volume of said first data type; each said data collection device is configured to broadcast a data packet containing data of said first data type for reception by said at least one gateway, during which said at least one gateway is receptive to similar data packets containing data of said first data type from other ones of said data collection devices, using radio components operating in accordance with a modulation process; and each said data collection device is configured to establish an exclusive channel to said at least one gateway over which a plurality of packets are transmitted each containing a portion of data of said second data type, using said radio components operating in accordance with said modulation process.

In this way, it is not necessary to provide multiple radio systems. In an embodiment, a plurality of gateways are provided in the network, wherein each said plurality of gateways receives broadcasted data packets from each data collection device within range. The control station may be configured to authorise a gateway to continue communicating with an active data collection device from which a broadcast signal has been received. Furthermore, the authorised gateway may be configured to transmit data to the active data collection device.

Preferable or optional features are set out in claims 2 to 10.

An aspect of the present invention is set out in independent claim 1.

According to a second aspect of the present invention, there is provided a data collection device, comprising: radio components for radio transmission with one or more gateways using a modulation process, wherein each gateway communicates with a control station; a data storage device for storing data of a first data type received from a first input device and for storing data of a second data type received from a second input device, wherein the data volume of said second data type is larger than the data volume of said first data type; and a processor, wherein said processor is configured to: broadcast individual packets of data of said first data type for reception by said one or more gateways; establish an exclusive channel with one of said gateways; and transmit packets containing portions of data of said second data type, wherein said first data type packet transmission and said second data type packet transmission deploy said radio components and said modulation process.

Preferable or optional features are set out in claims 12 to 15.

Another aspect of the present invention is set out in claim 11.

In an embodiment, the data collection device has a mobile energy source to facilitate mobility within the network. The data collection device may include a motion sensor and the motion sensor may control the rate at which packets containing data of the first data type are transmitted as broadcasted bursts.

According to a third aspect of the present invention, there is provided a method of transmitting data within a radio system, comprising the steps of: collecting data of a first data type at each of a plurality of data collection devices; radio broadcasting packets of data of said first data type from each said data collection device for reception by said at least one gateway, using radio components operating in accordance with a modulation process; collecting data of a second data type at said data collection devices, wherein the volume of data of said second data type is larger than the volume of data of said first data type; establishing an exclusive radio channel between an active data collection device and an authorised one of said at least one gateways; radio transmitting a plurality of data packets from said active data collection device to said authorised gateway, each including a portion of data of said second data type and using said radio components and said modulation process; and transmitting data from said at least one gateway to a control station.

Preferable or optional features are set out in claims 17 to 25.

Another aspect of the present invention is set out in claim 16.

Radio communications may be encrypted. That is to say, an encryption element may be provided. The encryption element may encode the data to the transmitted or decode data that is received through an encryption key. The encryption element may be configured for 128bit encryption or 256bit encryption. The gateway may comprise an encryption element for encrypting data to send to the control station.

In some embodiments, the or each gateway may be operably configured with a plurality of communication channels.

In some embodiments, the or each gateway may comprise a number of radio component sets for communication, for example one set of radio components may comprise a radio communication module and/or radio antenna. The radio component sets provide a means to allow the gateway to communication to multiple data collection devices at the same time through different modes, for example to communicate through an exclusive channel with one data collection device while be capable to receive burst transmission from other data collection devices.

In some embodiments, the established exclusive communication channel may be one of the communication channels from the plurality of communication channels. The remaining communication channels of the plurality of communication channels may be receptive to broadcasts of a data packet containing data of said first type from other data collection devices. That is to say, each gateway may establish an exclusive connection through an exclusive channel to one data collection device for receipt of a data packet containing data of the second type and use each remaining communication channel for receipt of a data packet containing data of the first type from other data collection devices.

Advantageously each gateway is able to provide a high data rate connection to one data collection device through an exclusive channel for data packets containing data of the second type while also listening to burst communications, i.e. data packets containing data of a first type, from other data collection devices. In some embodiments, each gateway may also respond if necessary to burst communications from other data collection devices.

Embodiments of the invention will be described, by way of example only, with reference to the accompanying drawings. The detailed embodiments show the best mode known to the inventor and provide support for the invention as claimed. However, they are only exemplary and should not be used to interpret or limit the scope of the claims. Their purpose is to provide a teaching to those skilled in the art. Components and processes distinguished by ordinal phrases such as "first" and "second" do not necessarily define an order or ranking of any sort.

### BRIEF DESCRIPTION OF THE SEVERAL VIEWS OF THE DRAWINGS

*Figure* 1 shows a radio transmission system operating in accordance with a first mode;
*Figure* 2 shows the radio transmission system of *Figure* 1, operating in a second mode;
*Figure* 3 shows a second embodiment of the radio transmission system, including multiple gateways and multiple data collection devices;
*Figure* 4 details a data collection device of the type identified in *Figure 3**,* including a central processing unit and a memory;
*Figure 5* illustrates executable instructions in the form of a memory map for a memory device identified in *Figure 4*;
*Figure 6* illustrates operations performed by a central processing unit identified in *Figure 4**,* including a step for high data mode transmission;
*Figure 7* shows a protocol diagram illustrating transmissions that take place within the network identified in *Figure 3*;
*Figure 8* details a high data mode identified in *Figure 6*;
*Figure 9* illustrates operations of the type shown in *Figure 8**,* working at a relatively high transmission rate; and
*Figure 10* is a similar illustration to that of *Figure 9**,* working at a lower transmission rate.

### DETAILED DESCRIPTION OF EMBODIMENTS OF THE INVENTION

### Figure 1

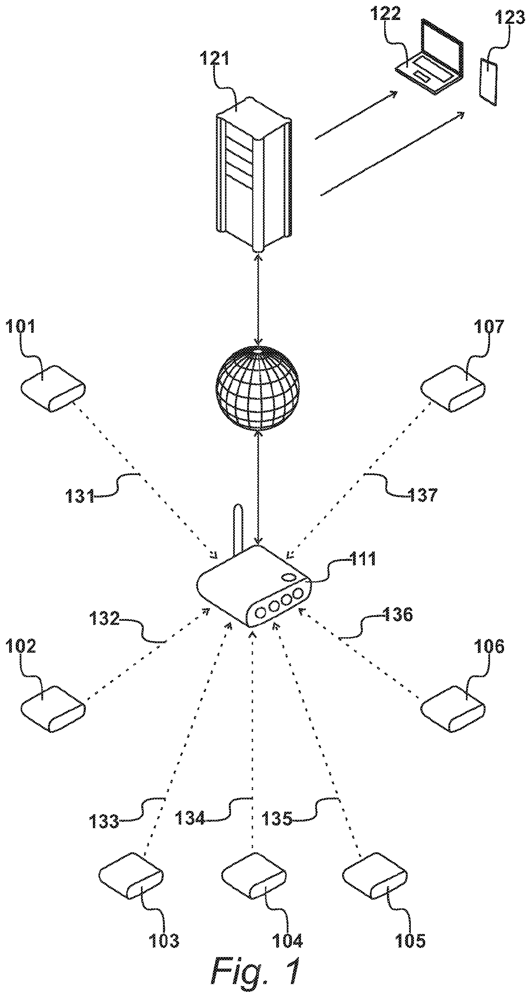

A radio transmission system for the transmission of data is shown in *Figure* 1. The system may include a single data collection device but in most practical realisations, many data collection devices are provided within the environment. For the purposes of illustration, seven data collection devices are shown in *Figure 1*, identified as a first data collection device **101** to a seventh data collection device **107.** In a practical realisation, many hundreds or many thousands of devices of this type may be provided within the network.

The network includes at least one gateway and a single gateway **111** is shown in *Figure* 1. The gateway **111** is arranged to provide radio communications between the data collection devices **101** to **107** and the gateway **111.** Furthermore, a control station **121** is arranged to provide data communications between the gateway **111** and the control station **121,** which in turn may relay this information to manually operable devices such as a laptop computer **122** and a mobile cellular telephone **123.**

Each data collection device is configured to receive data of a first data type and data of a second data type, wherein the data volume of the second data type is larger than the data volume of the first data type. A particular example of this environment consists of the metering of a utility. The first data type may indicate that a single unit has been consumed, whereas the second data type may represent an image illustrating the total units that have been consumed over a period of time. In this way, the first data type provides low-cost real-time data whereas the second data type provides an accurate visual representation but is sent far less frequently. The overall effect is to achieve accuracy with minimum power consumption, while optimising the available infrastructure.

Each of the data collection devices **(101-107)** is configured to broadcast a data packet containing data of the first data type for reception by the gateway **111.** These broadcast signals are illustrated by dotted lines **131, 132, 133, 134, 135, 136** and **137.** Thus, the first data collection device **101** broadcasts a data packet (illustrated by line **131)** containing data of the first data type for reception by the gateway, during which the gateway **111** is receptive to similar data packets containing data of a first data type from other ones of the data collection devices, as illustrated by the other dotted lines **132** to **137.**

Each burst of data is relatively short and occupies a small portion of the overall transmission bandwidth. Consequently, although interference may occur sometimes and some broadcasts may be lost, a high proportion of these data bursts are received by the gateway to maintain sufficient data integrity. However, in this mode of operation, there is no control channel and each data collection device operates independently, ensuring that power is not wasted by spending significant amounts of time waiting for the reception of control signals. Thus, this mode of operation may be identified as a burst mode, as distinct from a control channel mode.

The data collection devices and the gateway include radio components operating in accordance with an appropriate modulation process to achieve the burst mode operation, in which packets of a predetermined size are transmitted to the gateway.

### Figure 2

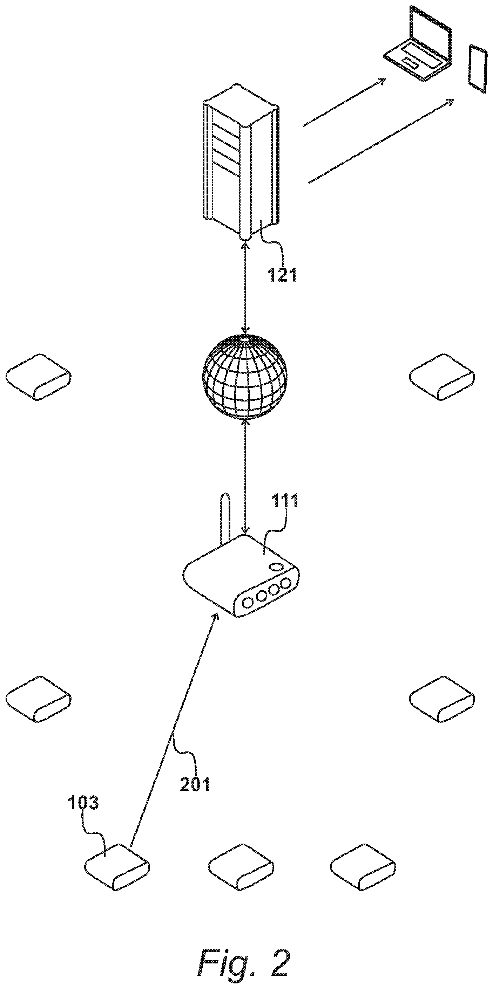

The network environment of *Figure 1* is also shown in *Figure 2**.* Each data collection device is configured to establish an exclusive channel to the gateway **111** over which many packets may be transmitted each containing a portion of data of a second data type. Furthermore, this transmission makes use of the same radio components operating in accordance with substantially the same modulation process.

In the example shown in *Figure 2**,* the third data collection device **103** has established an exclusive channel to the gateway **111,** identified by solid line **201.** When an exclusive channel of this type has been established, the gateway **111** is no longer in a position to receive broadcasted bursts of data from the remaining data collection devices.

### Figure 3

The network described with reference to *Figure* 1 and *Figure* 2 may be expanded and to cover a wider area. In this example, it is provided with a plurality of gateways. Thus, in this example, many data collection devices are provided within the network, including a first data collection device **301** a second data collection device **302,** a third data collection device **303** and a fourth data collection device **304** etc. Furthermore, in addition to a first gateway **311,** the network has a second gateway **312** and a third gateway **313.**

The first gateway 311, the second gateway **312** and the third gateway **313** each receive broadcasted data packets from each data collection device within range. In this example, data collection device **303** is broadcasting a burst of data which is received by all three gateways in the network, given that all three are within range. Each gateway transmits this data to a control station **321,** where they are identified as being duplicated. Each burst of data includes an identification of the transmitting source, from which it is possible to confirm that three copies of the same data have been received. Thus, only one copy of the data will be posted to a database resident within the control station **321.**

If the control station **321** is expecting to receive data of the second data type from the third data collection device **303,** an exclusive channel is established with only one of the gateways. A selection may be made with respect to signal strength. Notwithstanding the presence of obstacles etc, it is likely that the highest signal strength will have been received by the third gateway **313,** given that this is closest to the third data collection device **303.** The control station authorises the third gateway **313** to communicate with the third data collection device **303,** such that it may now be identified as an authorised gateway. The authorised gateway **313** instructs the third data collection device **303** to remain active and thereby receptive to further transmissions from the authorised gateway.

During the broadcasting of data bursts, the total size of each burst is limited due to the presence of noise in the radio environment. In an embodiment, messages typically include thirty-two bytes or sixty-four bytes. Consequently, a limit is placed on the size of each burst in terms of a total amount of data that can be sent. This data volume is sufficient for transmitting data of the first type. However, in addition, the same radio environment is used for transmitting data of the second type. For data of the second type, the data file can be of any size but to achieve data transmission, it is now necessary to have timed communications between two points. Timeslots and data formats must be defined for the communication; therefore, this second mode of communication is significantly different from the first mode of communication.

The embodiment provides a network whereby, on command, part of the network can act as if it has a control channel that can communicate and give timing reference to another part of the network; where packets are verified and resent if necessary. After the complete data volume of the second data type has been transmitted, the system can stop being a control channel type radio system and go back to being a burst type radio system. Thus, this provides a mechanism by which large files can be transmitted on demand, while not being limited by the burst error rate.

### Figure 4

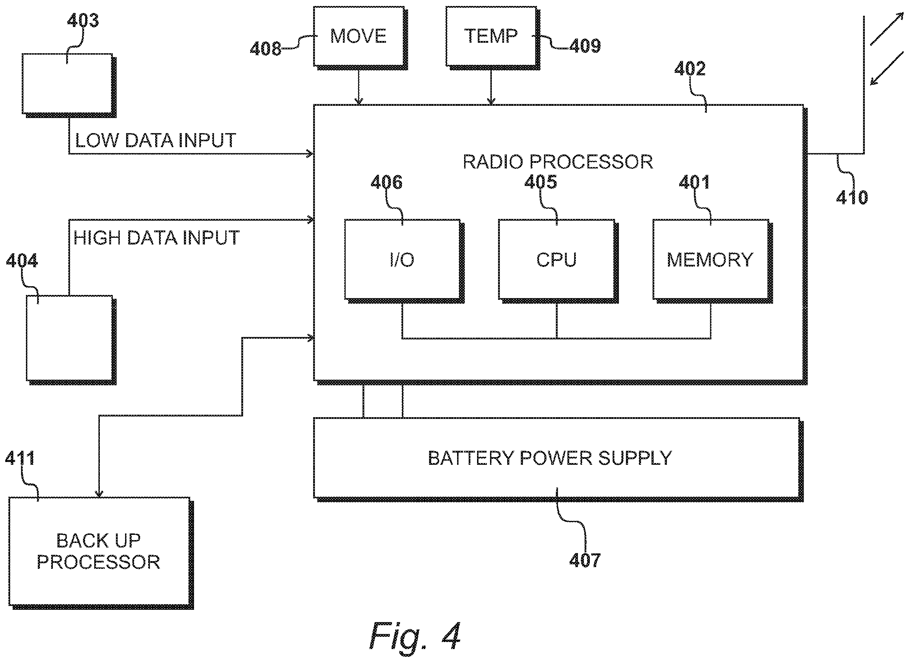

An example of a data collection device, such as data collection device 303, is shown in *Figure 4**.* The data collection device has radio components for radio transmission with one or more gateways using a modulation process, wherein each gateway communicates with the control station **121.** The data collection device includes a data storage device (memory) **401** within a radio processor **402.** The data storage device **401** stores data of a first data type, received from a first input device **403,** and stores data of a second data type received from a second input device **404.** The data volume of the second data type is larger than the data volume of the first data type. The radio processor **402,** having a central processing unit **405,** is configured to broadcast individual packets of data of the first data type for reception by one or more gateways. In addition, the processor **402** is also configured to establish an exclusive channel with one of the gateways and transmit packets containing portions of data of the second data type. The first data type packet transmissions (mode 1) and the second data type packet transmissions (mode 2) deploy the same radio components and the same modulation process. The first input device **403** and the second input device **404** communicate with a central processing unit **405** via data interfaces **406.**

It is possible for the device to be energized from a grid supply but in an embodiment, the device includes a mobile energy source to facilitate mobility within the network. In the example shown in *Figure 4**,* power is received from a rechargeable battery power supply **407.**

In an embodiment, the data collection device also includes a motion sensor **408.** Situations often arise where there is a greater demand for data of the first type when movement occurs. Thus, in an embodiment, output signals from the motion sensor **408** may generate an interrupt signal forcing the central processing unit **405** to enter an active mode (from a sleep mode) and thereafter read data from the low data input for subsequent broadcast. Thus, in this way, it is possible for the motion sensor to effectively control the rate at which packets containing data of the first data type are transmitted as broadcasts or bursts.

Embodiments of the data collection device may also include a temperature sensor **409.** In some applications, this may represent a primary data source or temperature data may be provided in addition to data of the first data type received from the first data input device **403.** Transmission to and from a gateway is achieved via an aerial **410.**

In a further embodiment, it is possible to incorporate a further processing device, such as a peripheral interface computer (PIC) processor **411,** effectively acting as a backup processor. The backup processor may be provided with a real-time operating system for maintaining a record of data to facilitate a recovery from a re-set operation.

The radio processor **402** may be implemented around an EZ R3 2WG wireless MCU available from Silicon Labs of Austin, Texas, USA. This includes an ARM cortex M4 core with a thirty-two-bit RS RISC processor. The device includes a memory protection unit with support for up to eight memory segments in addition to a wake-up interrupt controller handling interrupts triggered when the CPU is asleep. Additional analogue to digital converters may be required, depending upon the specific output received from the input devices.

### Figure 5

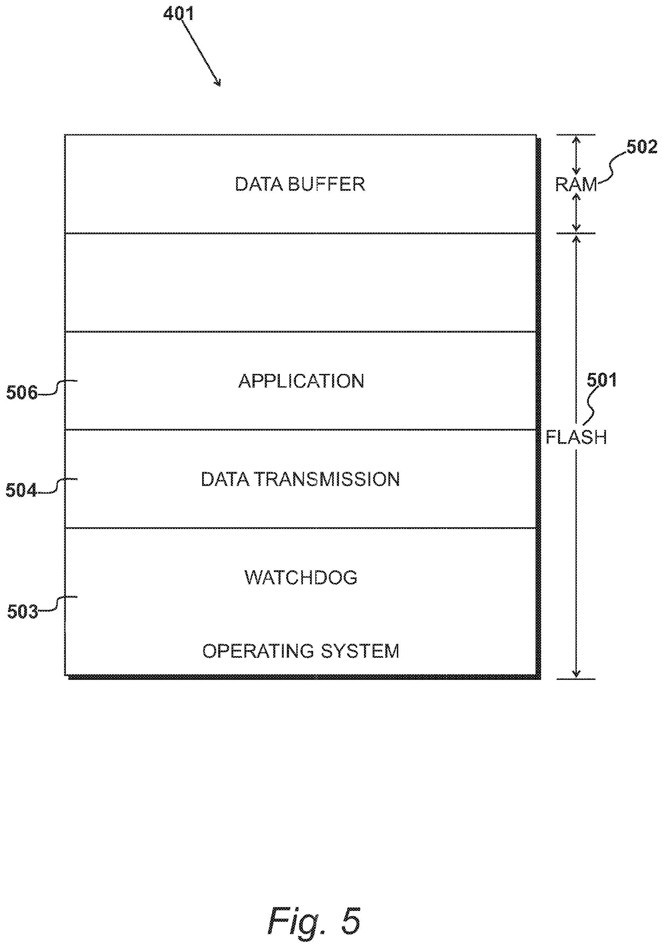

An example of a memory map for the memory of storage device **401** is illustrated in *Figure 5**.* The device **401** includes programmable flash memory **501,** and volatile randomaccess memory **502** for storing operational data. In an embodiment, sixty-four kilobytes of storage are available for receiving instructions and in the embodiment described with reference to *Figure 4**,* executable instructions may be assembled using the development language made available by Silicon Labs. Different radio layers are written that are downloaded onto the device, ensuring that the device is capable of performing the required mode changes that are in turn controlled from the base station side.

A base operating system is stored at **503** that initiates power up and perform checks. It also performs a watchdog function resulting in selected pins being tweaked to check if an expected output is produced. This operating system does not have a sense of time and the procedures are event driven.

Instruction stacks are placed on top of the operating system at **503.** This includes instructions at **504** for data transmission, with further instructions at **506** for a particular application.

### Figure 6

The apparatus described with reference to *Figures 1* to *5* facilitates the implementation of a method of transmitting data within a radio system in which data is collected of a first data type at each of a plurality of data collection devices. The radio broadcasting of packets of data of the first data type are performed from each of the data collection devices for reception by at least one gateway, using radio components operating in accordance with a modulation process. The method continues by collecting data of a second data type at an active one of the data collection devices, wherein the volume of data of the second data type is larger than the volume of data of the first data type. An exclusive radio channel is established between the active data collection device and an authorised one of the gateways. A plurality of data packets are then transmitted from the active data collection device to the authorised gateway, each including a portion of data of the second data type using the same radio components and the same modulation process. As previously described, broadcasts from a radio collection device may be received by a single gateway or by a plurality of gateways in the network.

Whenever possible, the central processing unit **405** is placed into a dormant (sleep) state to conserve power. At step **601,** the central processing unit is brought out of this dormant state by a wake-up command; this interrupt may be generated by an on-chip low-energy timer.

At step **602,** a watchdog timer is incremented and at step **603** a question is asked as to whether the count has now reached a maximum value. If yes, the processor is reset at step **611,** which may involve storing data in non-volatile memory such that the process may resume where it left off upon re-energization. The radio processor itself also includes a watchdog timer that generates a reset in case of system failure. As previously described, a backup processor **411** may be provided to recover from situations of this type, which itself may be shielded from radio interference etc.

If the question asked at step **603** is answered in the negative, to the effect that the count has not reach the maximum value, low volume data of the first type is received from the first input device **403.**

At step **605,** the data received at step **604** is converted to binary and a burst is broadcasted in accordance with the first mode of operation at step **606.** In accordance with many systems of this type, after transmitting a burst of data, the receiver side of the radio processor is activated in anticipation of receiving data from a gateway. In this embodiment, the data collection device listens to determine whether it is required to enter its second mode and transmit a larger volume of data of the second data type. Thus, if no response of this type is received, no further action is required on the part of the data collection device and it is then placed back into its sleep mode at step **610;** in anticipation of receiving the next wake-up interrupt. It should also be appreciated that embodiments may be responsive to other types of incoming messages from a gateway, possibly representing the commands for other functionalities not related to an aspect of the present invention.

Alternatively, if the question asked at step **608** is answered in the affirmative, the device enters its high data mode to transmit a larger volume of data of the second data type.

The radio processor **402** is generally running in burst mode but once it enters the high data rate mode, with the question asked at step **608** being answered in the affirmative, it is then in a one-to-one relationship with the gateway with which communication has been established and no further burst activities are permitted. Consequently, this limits the extent to which processors in the system can perform alternative processes.

The burst mode is a broadcast that can be picked up by any part of the network and bursts go one to many; and may consequently be identified as a broadcast. In the high data rate mode, the device is just picking one gateway and forming a hard communication link exclusively with that one gateway. It is not possible for the gateway to communicate with the rest of the network until the high data rate transmission has completed.

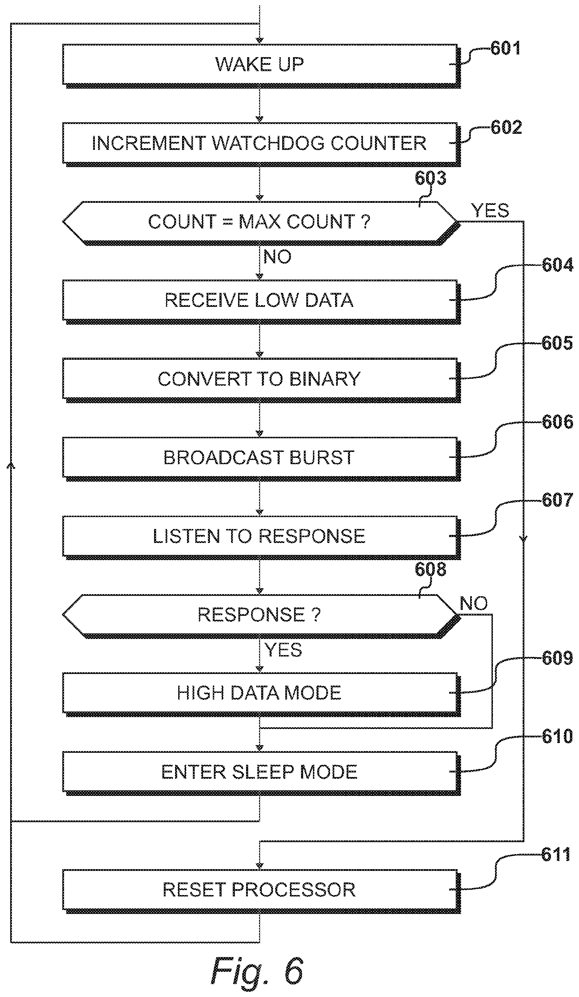

The gateways are provided with similar functionality to that described with reference to *Figure 6**.* Thus, the gateway receives binary bits and returns them to their original ASCII format. The gateway locates an identification from the transmitting device which is then sent to the control station **121.**

Memory slots are provided within each gateway identifying the fact that a particular message is to be sent to a particular data collection device. In an embodiment, it is also possible to set the amount of time that a message can remain in a memory slot before it is deleted. Thus, the question asked at step **608** will be answered in the affirmative if the control station has posted a message for that particular device. The message from the gateway tells the device to stay awake, in the data receive window, because there is a further message for it. The gateway will then pass on whatever message it has for that particular device, having received it from the control station.

Thus, in an embodiment, the step of establishing an exclusive channel comprises the steps of sending an authorising signal from the control station to an authorised gateway and then authorising the authorised gateway to continue communicating with an active data collection device. The gateway may then transmit further data to an active data collection device, effectively instructing it to enter the second high data mode. Data transmitted by the device to the gateway is then relayed to the control station **121.**

### Figure 7

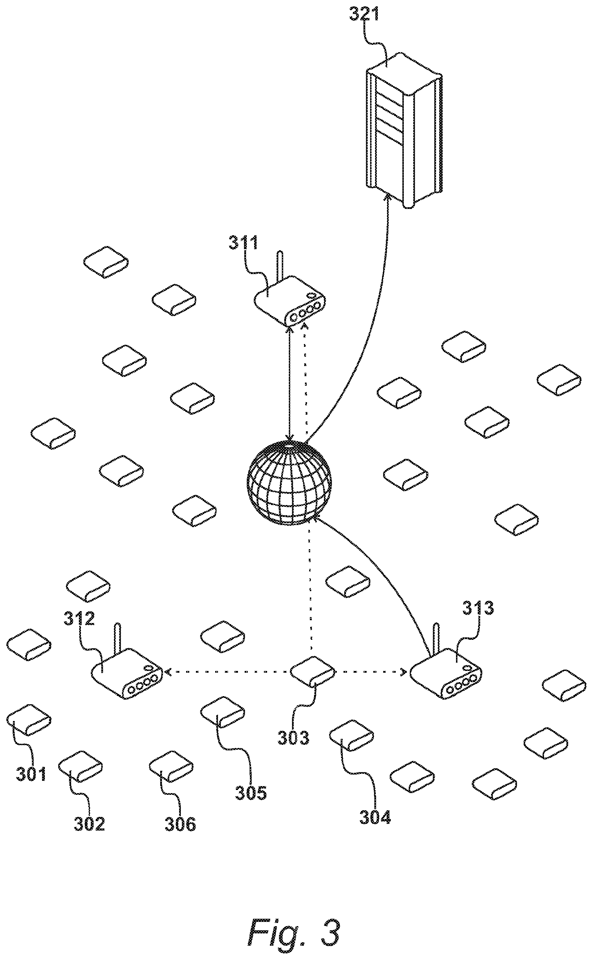

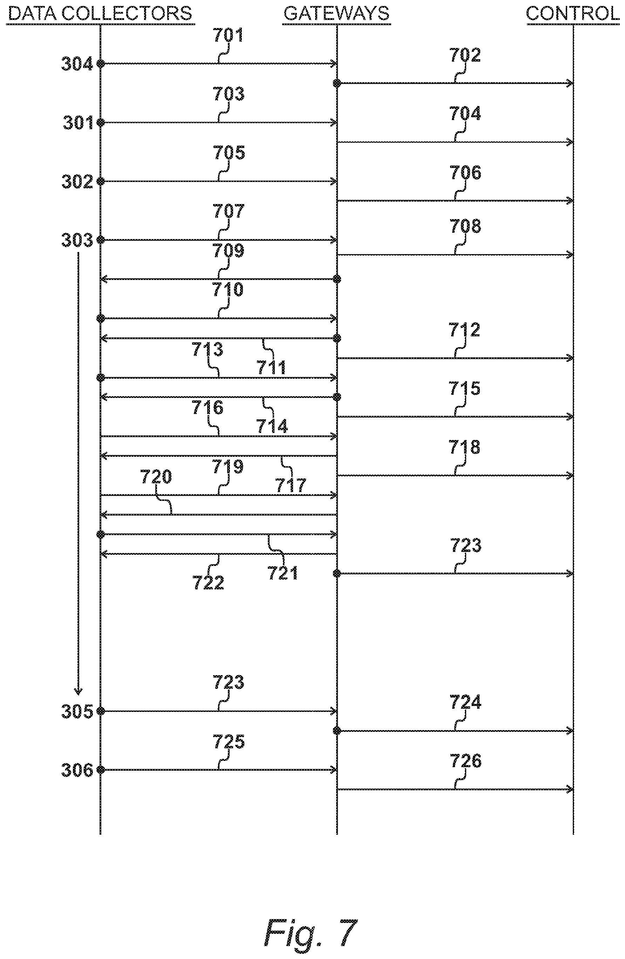

A protocol diagram, representing communications performed within the network described with reference to *Figure 3**,* is shown in *Figure 7*. A vertical line for the data collectors represents any of the data collectors in the network. Similarly, a vertical line for the gateways represents all of the gateways in the network, each communicating with the control station **121.**

For the purposes of this example, it is assumed that data collection device **304** issues a burst **701** of data, which is then relayed to the control station at **702.** This is followed by a burst **703** from device **301** which is again relayed to the control station **704.** Similarly, device **302** broadcasts burst **705,** with the data **706** being relayed to the control station. Devices **304, 301** and **302** are identified by one or more gateways which, in this example, do not have messages to send back to the identified data collection device.

A burst **707** is broadcast by device **303** which is again relayed to the control station at **708.** On this occasion, the gateways have received a message from the control station and this is sent back to the originating data collection device at **709,** during the window in which the device is receptive. This in turn results in the question asked at step **608** being answered in the affirmative, such that device **301** remains active and available to operate in the high data mode.

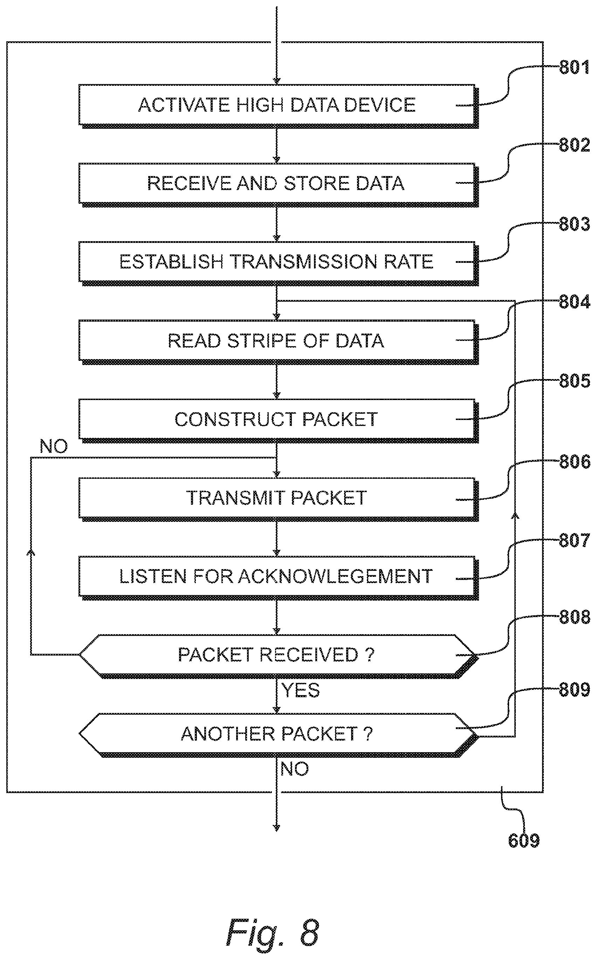

Upon entering the high data mode, a relatively large volume of data of the second data type is divided into packets, following the procedures described with reference to *Figures* 8 to 10. This results in a first packet being transmitted at **710** which is analysed by the authorised gateway **313.** A checksum confirms that the data is valid, and is therefore acknowledged at **711,** before being relayed to the control station at **712.**

Device **303** now transmits a second packet at **713** which is again acknowledged at **714** and relayed to the control station at **715.** This is then followed by a third packet **716** which is acknowledged at **717** as being valid and the data is relayed at **718.**

A further packet of the data is transmitted at **719** and a checksum is performed by the gateway. On this occasion, for the purposes of providing an example, the checksum is found to be invalid and this condition is sent back to the device **303** at **720.** Upon receiving an indication that the last transmission was not successfully received, the data is retransmitted at **721** and on this occasion, the data is acknowledged successfully at **722;** resulting in the data being relayed to the control station at **723.** Thus, this process continues until all of the data of the second data type has been transmitted, whereafter the system may return to burst mode operation. Thus, a burst **723** is transmitted from device **305** which is relayed at **724** to the control station. Similarly, a burst **725** is transmitted by device **306** which is relayed at **726** to the control station.

### Figure 8

Procedures **609** for transmitting in the high data mode are shown in *Figure 8*. At step **801** the second input device **404** is activated, thereby instructing the device to produce a relatively large data volume of the second data type. At step 802, data from the second input device is received and stored in the data buffer provided by RAM **502.**

At step **803,** a transmission rate is established. Thus, the method provides, in an embodiment, for the rate of transmission of data packets containing data of the second data type, from the data collection device to the gateway to be adjusted; and this adjustment may occur in response to an assessment of signal strength.

In an embodiment, the transmission rate may range from fifty-six kilobits per second to two-hundred-and-fifty-six kilobits per second; determined from the signal strength of the packets that have already been sent. Thus, in the first mode of operation, gateway **313** has received a burst of data of the first data type from device **303.** At gateway **313,** signal strength may be determined and as a result of this, the gateway **303** can issue control data back to device 303 identifying the required transmission rate.

Data transfer rates are also dependent upon the transmission frequency used and quite high data rates can be achieved when the devices are close together. For example, a data file may take two seconds to transmit when the devices are two-hundred metres apart but the same data may take as long as two minutes to transmit if the devices are two kilometres apart.

At step **804,** a stripe of the data stored at step **802** is read and at step **805** a packet of data is constructed. The packet is transmitted at step **806** and at step **807** the device listens for an acknowledgement. At step **808,** a question is asked as to whether the packet has been received. If yes, the transmission is similar to that described for transmission **716,** which is acknowledged at **717** and then relayed at **718.** Alternatively, if the packet is not received, the transmission is similar to that described at **719,** resulting in data going back at **720** requesting the packet to be retransmitted at **721.** Thus, if the question asked at step **808** is answered in the negative, the same packet is transmitted again at step **806** and again the device listens for an acknowledgement at step **807.**

If the question asked at step **808** is answered in the affirmative, to the effect that the packet has been received without corruption, a question is asked at step **809** as to whether another packet is available. When answered in the affirmative, the next stripe of data is read at step **804** and the processes are repeated until all of the packets have been transmitted and the question asked at step **809** is answered in the negative.

### Figure 9

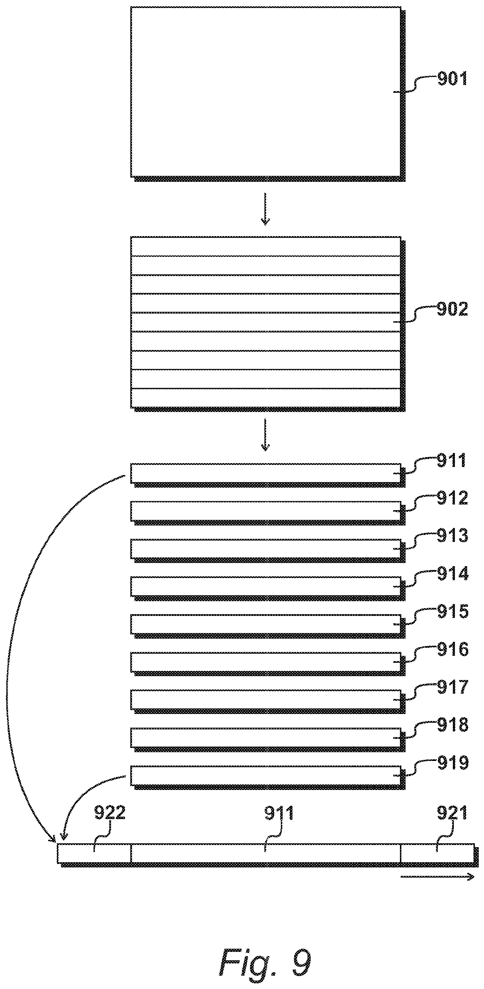

Procedures described with reference to *Figure 8* are illustrated in Figure 9. An example of data of the second data type is shown at *901,* received and stored at step *802*. Based on the transmission rate established at step **803,** the data is effectively divided into stripes as illustrated at **902.** In this example, the original data **901** has been divided into nine stripes, which in turn will be transmitted within separate packets as a first component **911** to a nineth component **919.**

The first component **911** is constructed into a packet, at step **805,** consisting of the data component **911** itself along with a header **921** and a checksum **922.** The header **921** includes data identifying this component as the first component of nine within the total data volume. The packet may be retransmitted, based on the checksum **922,** if an error occurs and the question asked at step **808** is answered in the negative. However, if the packet has been received, the question asked at step **809** will be answered in the affirmative and the next component **912** will be selected at step **804.**

Each packet starts with a distinctive code and ends with a distinctive code and has a checksum in it. During the transmission of these packets, the network is not doing anything else. In an embodiment, transmission occurs at a frequency of four-hundred-and-thirty-three Hertz with a transmission power of ten milli-Watts, occupying a 10% duty cycle. The received signal strength will therefore depend upon the distance between the transceivers and the presence of any obstacles in the transmission path. At the end of the data transmission, a special character may be transmitted to prevent the transmission of invalid data.

### Figure 10

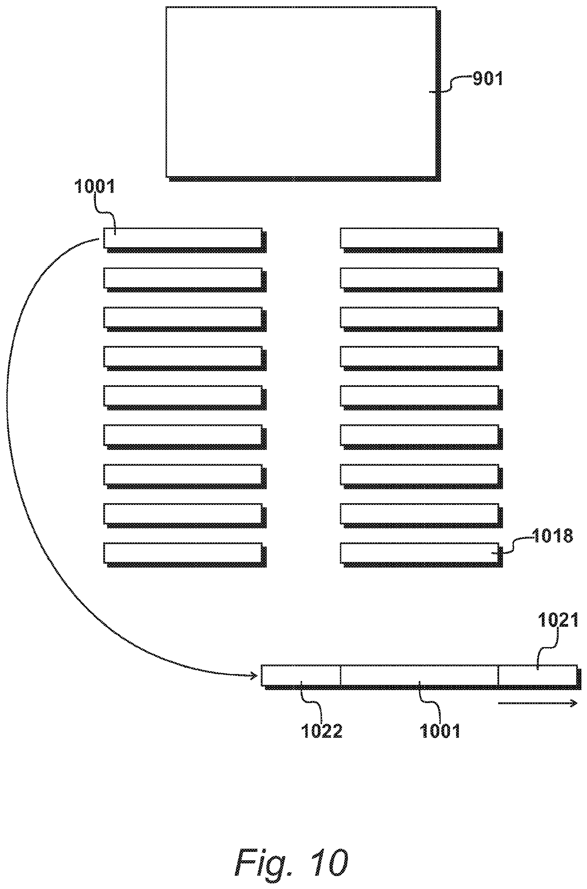

In an embodiment, packet size is determined by bit error rate which in turn may be assessed by considering signal strength. The data volume **901** containing data of the second data type, is also shown in *Figure 10**.* However, on this occasion, it has been determined that the signal strength is lower, therefore smaller packets are required. For the purposes of this example, instead of striping to form nine components, striping has been performed to produce eighteen components **1001** to **1018.** Again, a similar header **1021** is included along with a checksum **1022** but the data component **1001** contained within the packet is smaller than data component **911.**

As range increases, it becomes necessary to reduce the data transmission rate. Packet size may remain constant (particularly when the smallest convenient size has been reached) but the transmission rate is slowed down due to poor signal quality. In an embodiment, packet size and transmission rate may be adjusted dynamically during a data exchange session between a data collection device (tag) and a gateway.

In an embodiment, the first datatype may relate to individual data values. These individual data values may confirm, for example, that a predetermined quantity of a commodity has been consumed, such as a unit of gas, a unit of electricity or a unit of water. These may be identified as pulse producing systems and a problem exists with systems of this type in that pulses may be missed; therefore, accuracy cannot be guaranteed. Thus, verification can be provided by transmitting data of the second data type, relating to, for example, a representation taking the form, of an image file or photograph, or a video recording.

In some embodiments discussed above the or each gateway is no longer receptive to broadcasted burst data from other data collection devices once an exclusive channel has been established. However, in other embodiments, the gateway is receptive to broadcasted burst data from other collection devices through other communication channels, i.e. it is only the exclusive channel which is no longer capable of receiving broadcasted burst data.

In such cases, the or each gateway may be operably configured to comprise at least two communication channels, with one channel being receptive to burst data when the other has established an exclusive link. It will be understood that when an exclusive link is not needed the gateway may only use one channel to listen to and receive burst data.

During an exclusive link, the data from any burst transmission, i.e. data of the first type, from other data collection devices may be stored in a memory for later transmission after the complete data volume of the second data type has been transmitted. A skilled person will appreciate that in other embodiments the gateway and control station may be arranged such that there is no need to store data from any burst transmission until after the complete data volume of the second data type has been transmitted.

Many industrial situations require an occasional visible verification. For example, a railway bridge may be being monitored for cracks and each train is detected with confirmation being sent back to base identifying these detections. However, after a predetermined number of trains have passed (for example one thousand) a visual inspection is made of a test plate. Furthermore, if an incident occurs at that bridge, it is then possible to return visual data immediately.

Thus, situations arise where the regular monitoring of a relatively small amount of data has particular uses but overall functionality is enhanced, without creating a substantial overhead, by being able to transmit larger volumes of data, using the same radio system, when required. Regular water metering, for example, facilitates the identification of leaks.

## Claims

1. A radio system for the transmission of data, comprising:
a plurality of data collection devices (301-306);
at least one gateway (313) arranged to facilitate radio communications between said plurality of data collection devices (301-306) and said at least one gateway (313); and
a control station (321) arranged to facilitate data communications between said at least one gateway (313) and said control station (321);
***characterised in that*** each said data collection device (303) is configured to receive data of a first data type and data of a second data type, wherein the data volume of said second data type data is larger than the data volume of said first data type;
each said data collection device (303) is configured to broadcast a data packet (131-137) containing data of said first data type for reception by said at least one gateway (313), during which said at least one gateway (313) is receptive to similar data packets (131-137) containing data of said first data type from other ones of said data collection devices (303), using radio components operating in accordance with a modulation process; and
each said data collection device (303) is configured to establish an exclusive channel (201) to said at least one gateway (313) over which a plurality of packets are transmitted each containing a portion of data of said second data type, using said radio components operating in accordance with said modulation process.

2. The radio system of claim **1,** wherein said data collection devices (303) are substantially mobile and include a mobile energy source (407).

3. The radio system of claim **2,** wherein each said data collection device (303) includes a motion sensor (408) and is configured to transmit data packets containing data of said first data type at an increased transmission rate upon detecting motion.

4. The radio system of any of claims **1** to **3,** comprising a plurality of gateways (311-313) in a network, wherein each said plurality of gateways (311-313) receives broadcasted data packets from each data collection device (301-306) within range.

5. The radio system of claim **4,** wherein said control station (321) is configured to authorise a gateway (313) to continue communicating with an active data collection device (303) from which a broadcast signal has been received.

6. The radio system of claim **5,** wherein said authorised gateway (313) is configured to transmit data to said active data collection device (303), and said active data collection device (303) is instructed by said gateway (313) to remain receptive to further transmissions from said authorised gateway (313).

7. The radio system of claim **6,** wherein said further transmissions from the authorised gateway (313) to the active data collection device contain data received by the gateway from the control station (321).

8. The radio system of any of claims **1** to **7,** wherein the rate of transmission of data packets containing data of said second data type is adjusted in response to a measurement of signal strength when transmitting data packets containing data of said first data type.

9. A data collection device (303), comprising:
radio components for radio transmission with one or more gateways (311-313) using a modulation process, wherein each gateway (313) communicates with a control station (321);
a data storage device (401) for storing data of a first data type received from a first input device and for storing data of a second data type received from a second input device, wherein the data volume of said second data type is larger than the data volume of said first data type; and
a processor (402), wherein said processor (402) is configured to:
broadcast individual packets of data of said first data type for reception by said one or more gateways (311-313);
establish an exclusive channel (201) with one of said gateways (313); and
transmit packets containing portions of data of said second datatype over the exclusive channel (201), wherein
said first data type packet transmissions and said second datatype packet transmissions employ said radio components and said modulation process.

10. The data collection device according to claim **9,** further comprising a motion sensor (408), wherein said motion sensor (408) controls the rate at which packets containing data of the first data type are transmitted as broadcasted bursts.

11. The data collection device according to any of claims **9** to **10,** further comprising a temperature sensor (409), wherein each transmitted data packet of said first data type represents a temperature measurement.

12. A method of transmitting data within a radio system, comprising the steps of:
collecting data of a first data type at each of a plurality of data collection devices (301-306);
radio broadcasting packets of data of said first data type from each said data collection device (303) for reception by said at least one gateway (313), using radio components operating in accordance with a modulation process;
collecting data of a second data type at an active one of said data collection devices, wherein the volume of data of said second data type is larger than the volume of data of said first data type;
establishing an exclusive radio channel (201) between said active data collection device (303) and an authorised one of said at least one gateways (313);
radio transmitting a plurality of data packets from said active data collection device (303) to said authorised gateway or plurality of gateways (311-313) over the exclusive radio channel (201), each including a portion of data of said second data type, using said radio components and said modulation process; and
transmitting data from said at least one gateway (313) to a control station (321).

13. The method of claim **12,wherein** said step of establishing an exclusive channel comprises the steps of:
sending an authorising signal from the control station (321) to an authorised gateway (313);
authorising the authorised gateway (313) to continue communicating with an active data collection device (303);
transmitting data from an authorised gateway (313) to an active data collection device (303); instructing the active data collective device (303) to remain receptive to further communications from the authorised gateway (313); and
relaying messages from the control station (321) to the active data collection device (303) via the authorised gateway (313).

14. The method of any of claims **12** to **13,** wherein the rate of transmission of data packets containing data of the second data type from the second data collection device (303) to the gateway (313) is adjusted in response to a measurement of signal strength.

15. The method of any claims **12-14,** wherein the first data type relates to individual data values and said individual data values confirm that a predefined quantity of a commodity has been consumed, wherein said commodity is selected from a non-exclusive list comprising a unit of gas, a unit of electricity and a unit of water and the second data type relates to an environmental representation and is selected from a non-exclusive list comprising an image file (photograph) and a video recording.

## Patentansprüche

1. Funksystem zur Übertragung von Daten, umfassend:
eine Vielzahl von Datenerfassungsvorrichtungen (301-306); mindestens ein Gateway (313), das so angeordnet ist, dass es Funkkommunikationen zwischen der Vielzahl von Datenerfassungsvorrichtungen (301-306) und dem mindestens einen Gateway (313) ermöglicht; und
eine Steuerstation (321), die so angeordnet ist, dass sie die Datenkommunikation zwischen mindestens einem Gateway (313) und der Steuerstation (321) erleichtert;
***dadurch gekennzeichnet, dass*** jede der Datenerfassungsvorrichtungen (303) so konfiguriert ist, dass sie Daten eines ersten Datentyps und Daten eines zweiten Datentyps empfängt, wobei das Datenvolumen der zweiten Datentypdaten größer ist als das Datenvolumen des ersten Datentyps;
jede Datenerfassungsvorrichtung (303) so konfiguriert ist, dass sie ein Datenpaket (131-137), das Daten des ersten Datentyps enthält, zum Empfang durch das mindestens eine Gateway (313) aussendet, während das mindestens eine Gateway (313) ähnliche Datenpakete (131-137), die Daten des ersten Datentyps enthalten, von anderen der Datenerfassungsvorrichtungen (303) empfängt, unter Verwendung von Funkkomponenten, die nach einem Modulationsverfahren arbeiten; und
jede Datenerfassungsvorrichtung (303) so konfiguriert ist, dass sie einen exklusiven Kanal (201) zu mindestens einem Gateway (313) einrichtet, über den eine Vielzahl von Paketen übertragen werden, die jeweils einen Teil der Daten des zweiten Datentyps enthalten, unter Verwendung der Funkkomponenten, die nach dem Modulationsverfahren arbeiten.

2. Funksystem nach Anspruch **1,** bei dem die Datenerfassungsvorrichtungen (303) weitgehend mobil sind und eine mobile Energiequelle (407) enthalten.

3. Funksystem nach Anspruch **2,** wobei jede der Datenerfassungsvorrichtungen (303) einen Bewegungssensor (408) enthält und so konfiguriert ist, dass sie Datenpakete mit Daten des ersten Datentyps bei Erkennung einer Bewegung mit einer erhöhten Übertragungsrate überträgt.

4. Funksystem nach einem der Ansprüche **1** bis **3,** das eine Vielzahl von Gateways (311-313) in einem Netzwerk umfasst, wobei jedes der Vielzahl von Gateways (311-313) ausgesendete Datenpakete von jeder Datenerfassungsvorrichtung (301-306) innerhalb der Reichweite empfängt.

5. Funksystem nach Anspruch **4,** wobei die Steuerstation (321) so konfiguriert ist, dass sie ein Gateway (313) autorisiert, weiterhin mit einer aktiven Datenerfassungsvorrichtung (303) zu kommunizieren, von der ein ausgesendetes Signal empfangen wurde.

6. Funksystem nach Anspruch **5,** wobei das autorisierte Gateway (313) so konfiguriert ist, dass es Daten an die aktive Datenerfassungsvorrichtung (303) sendet, und die aktive Datenerfassungsvorrichtung (303) von dem Gateway (313) angewiesen wird, empfänglich für weitere Übertragungen von dem autorisierten Gateway (313) zu bleiben.

7. Funksystem nach Anspruch **6,** wobei die weiteren Übertragungen von dem autorisierten Gateway (313) zu der aktiven Datenerfassungsvorrichtung Daten enthalten, die das Gateway von der Steuerstation (321) empfangen hat.

8. Funksystem nach einem der Ansprüche **1** bis **7,** wobei die Übertragungsrate von Datenpaketen, die Daten des zweiten Datentyps enthalten, als Reaktion auf eine Messung der Signalstärke bei der Übertragung von Datenpaketen, die Daten des ersten Datentyps enthalten, angepasst wird.

9. Datenerfassungsvorrichtung (303), umfassend:
Funkkomponenten für die Funkübertragung mit einem oder mehreren Gateways (311-313) unter Verwendung eines Modulationsverfahrens, wobei jedes Gateway (313) mit einer Steuerstation (321) kommuniziert;
eine Datenspeichervorrichtung (401) zum Speichern von Daten eines ersten Datentyps, die von einer ersten Eingabevorrichtung empfangen werden, und zum Speichern von Daten eines zweiten Datentyps, die von einer zweiten Eingabevorrichtung empfangen werden, wobei das Datenvolumen des zweiten Datentyps größer ist als das des ersten Datentyps; und
einen Prozessor (402), wobei der Prozessor (402) zu Folgendem konfiguriert ist:
Aussenden einzelner Datenpakete des ersten Datentyps zum Empfang durch das eine oder die mehreren Gateways (311-313);
Einrichten eines exklusiven Kanals (201) mit einem der Gateways (313); und
Übertragen von Paketen, die Teile von Daten des zweiten Datentyps enthalten, über den exklusiven Kanal (201), wobei
die ersten Datentyp-Paketübertragungen und die zweiten Datentyp-Paketübertragungen die Funkkomponenten und das Modulationsverfahren verwenden.

10. Datenerfassungsvorrichtung nach Anspruch **9,** die ferner einen Bewegungssensor (408) umfasst, wobei der Bewegungssensor (408) die Rate steuert, mit der Pakete, die Daten des ersten Datentyps enthalten, als ausgesendete Bursts übertragen werden.

11. Datenerfassungsvorrichtung nach einem der Ansprüche **9** bis **10,** die ferner einen Temperatursensor (409) umfasst, wobei jedes übertragene Datenpaket des ersten Datentyps eine Temperaturmessung darstellt.

12. Verfahren zum Übertragen von Daten innerhalb eines Funksystems, umfassend folgende Schritte:
Erfassen von Daten eines ersten Datentyps an jeder der Vielzahl von Datenerfassungsvorrichtungen (301-306);
funkgestütztes Aussenden von Datenpaketen des ersten Datentyps von jeder Datenerfassungsvorrichtung (303) zum Empfang durch das mindestens eine Gateway (313) unter Verwendung von Funkkomponenten, die nach einem Modulationsverfahren arbeiten;
Erfassen von Daten eines zweiten Datentyps an einer aktiven Datenerfassungsvorrichtung, wobei das Datenvolumen des zweiten Datentyps größer ist als das des ersten Datentyps;
Einrichten eines exklusiven Funkkanals (201) zwischen der aktiven Datenerfassungsvorrichtung (303) und einem autorisierten der mindestens einen Gateways (313);
funkgestütztes Übertragen einer Vielzahl von Datenpaketen von der aktiven Datenerfassungsvorrichtung (303) an das autorisierte Gateway oder einer Vielzahl von Gateways (311-313) über den exklusiven Funkkanal (201), wobei jedes einen Teil der Daten des zweiten Datentyps enthält, unter Verwendung der Funkkomponenten und des Modulationsverfahrens; und
Übertragen von Daten von dem mindestens einen Gateway (313) zu einer Steuerstation (321).

13. Verfahren nach Anspruch **12,** wobei der Schritt zum Einrichten eines exklusiven Kanals die folgenden Schritte umfasst:
Senden eines Autorisierungssignals von der Steuerstation (321) an ein autorisiertes Gateway (313);
Autorisieren des autorisierten Gateways (313), um weiterhin mit einer aktiven Datenerfassungsvorrichtung (303) zu kommunizieren;
Übertragen von Daten von einem autorisierten Gateway (313) zu einer aktiven Datenerfassungsvorrichtung (303);
Anweisen der aktiven Datenerfassungsvorrichtung (303), weiterhin für weitere Kommunikationen von dem autorisierten Gateway (313) empfänglich zu bleiben; und
Weiterleiten von Nachrichten von der Steuerstation (321) an die aktive Datenerfassungsvorrichtung (303) über das autorisierte Gateway (313).

14. Verfahren nach einem der Ansprüche **12** bis 13, wobei die Übertragungsrate von Datenpaketen, die Daten des zweiten Datentyps von der zweiten Datenerfassungsvorrichtung (303) an das Gateway (313) enthalten, als Reaktion auf eine Messung der Signalstärke angepasst wird.

15. Verfahren nach einem der Ansprüche **12-14,** wobei der erste Datentyp sich auf einzelne Datenwerte bezieht und die einzelnen Datenwerte bestätigen, dass eine vordefinierte Menge eines Produkts verbraucht wurde, wobei das Produkt aus einer nicht ausschließlichen Liste ausgewählt wird, die eine Gaseinheit, eine Stromeinheit und eine Wassereinheit umfasst, und der zweite Datentyp sich auf eine Umweltdarstellung bezieht und aus einer nicht ausschließlichen Liste ausgewählt wird, die eine Bilddatei (Foto) und eine Videoaufzeichnung umfasst.

## Revendications

1. Système radio pour la transmission de données, comprenant :
une pluralité de dispositifs de collecte de données (301-306) ;
au moins une passerelle (313) conçue pour faciliter les communications radio entre ladite pluralité de dispositifs de collecte de données (301-306) et ladite au moins une passerelle (313) ; et
une station de commande (321) conçue pour faciliter les communications de données entre ladite au moins une passerelle (313) et ladite station de commande (321) ;
***caractérisé* en ce que** chaque dit dispositif de collecte de données (303) est configuré pour recevoir des données d'un premier type de données et des données d'un deuxième type de données, dans lequel le volume de données desdites données du deuxième type de données est supérieur au volume de données dudit premier type de données ;
chaque dit dispositif de collecte de données (303) est configuré pour diffuser un paquet de données (131-137) contenant des données dudit premier type de données pour réception par ladite au moins une passerelle (313), durant laquelle ladite au moins une passerelle (313) est réceptive à des paquets de données similaires (131-137) contenant des données dudit premier type de données provenant d'autres dispositifs desdits dispositifs de collecte de données (303), en utilisant des composants radio fonctionnant conformément à un processus de modulation ; et
chaque dit dispositif de collecte de données (303) est configuré pour établir un canal exclusif (201) vers ladite au moins une passerelle (313) sur lequel sont transmis une pluralité de paquets contenant chacun une partie de données dudit deuxième type de données, en utilisant lesdits composants radio fonctionnant conformément audit processus de modulation.

2. Système radio selon la revendication **1,** dans lequel lesdits dispositifs de collecte de données (303) sont sensiblement mobiles et incluent une source d'énergie mobile (407).

3. Système radio selon la revendication **2,** dans lequel chaque dit dispositif de collecte de données (303) inclut un capteur de mouvement (408) et est configuré pour transmettre des paquets de données contenant des données dudit premier type de données selon une vitesse de transmission accrue lors de la détection d'un mouvement.

4. Système radio selon l'une quelconque des revendications **1** à **3,** comprenant une pluralité de passerelles (311-313) dans un réseau, dans lequel chacune de ladite pluralité de passerelles (311-313) reçoit des paquets de données diffusés par chaque dispositif de collecte de données (301-306) à portée.

5. Système radio selon la revendication **4,** dans lequel ladite station de commande (321) est configurée pour autoriser une passerelle (313) à poursuivre la communication avec un dispositif actif de collecte de données (303) duquel un signal de diffusion a été reçu.

6. Système radio selon la revendication **5,** dans lequel ladite passerelle autorisée (313) est configurée pour transmettre des données audit dispositif actif de collecte de données (303), et ladite passerelle (313) ordonne audit dispositif actif de collecte de données (303) de rester réceptif à des transmissions supplémentaires de ladite passerelle autorisée (313).

7. Système radio selon la revendication **6,** dans lequel lesdites transmissions supplémentaires de la passerelle autorisée (313) au dispositif actif de collecte de données contiennent des données reçues par la passerelle en provenance de la station de commande (321).

8. Système radio selon l'une quelconque des revendications **1** à **7,** dans lequel la vitesse de transmission de paquets de données contenant des données dudit deuxième type de données est ajustée en réponse à une mesure de l'intensité de signal lors de la transmission de paquets de données contenant des données dudit premier type de données.

9. Dispositif de collecte de données (303), comprenant :
des composants radio pour la transmission radio avec une ou plusieurs passerelles (311-313) utilisant un processus de modulation, dans lequel chaque passerelle (313) communique avec une station de commande (321) ;
un dispositif de stockage de données (401) pour stocker des données d'un premier type de données reçues d'un premier dispositif d'entrée et pour stocker des données d'un deuxième type de données reçues d'un deuxième dispositif d'entrée, dans lequel le volume de données dudit deuxième type de données est supérieur au volume de données dudit premier type de données ; et
un processeur (402), dans lequel ledit processeur (402) est configuré pour :
diffuser des paquets individuels de données dudit premier type de données pour réception par lesdites une ou plusieurs passerelles (311-313) ;
établir un canal exclusif (201) avec l'une desdites passerelles (313) ; et
transmettre des paquets contenant des parties de données dudit deuxième type de données sur le canal exclusif (201), dans lequel
les transmissions de paquets dudit premier type de données et les transmissions de paquets dudit deuxième type de données font appel auxdits composants radio et audit processus de modulation.

10. Dispositif de collecte de données selon la revendication **9,** comprenant en outre un capteur de mouvement (408), dans lequel ledit capteur de mouvement (408) commande la vitesse à laquelle les paquets contenant des données du premier type de données sont transmis sous forme de rafales diffusées.

11. Dispositif de collecte de données selon l'une quelconque des revendications **9** à **10,** comprenant en outre un capteur de température (409), dans lequel chaque paquet de données transmis dudit premier type de données représente une mesure de température.

12. Procédé de transmission de données au sein d'un système radio, comprenant les étapes suivantes :
la collecte de données d'un premier type de données à partir de chacun d'une pluralité de dispositifs de collecte de données (301-306) ;
la diffusion radio de paquets de données dudit premier type de données à partir de chaque dit dispositif de collecte de données (303) pour réception par ladite au moins une passerelle (313), en utilisant des composants radio fonctionnant conformément à un processus de modulation ;
la collecte de données d'un deuxième type de données au niveau d'un dispositif actif parmi lesdits dispositifs de collecte de données, dans lequel le volume de données dudit deuxième type de données est supérieur au volume de données dudit premier type de données ;
l'établissement d'un canal radio exclusif (201) entre ledit dispositif actif de collecte de données (303) et une passerelle autorisée parmi ladite au moins une passerelle (313) ;
la transmission radio d'une pluralité de paquets de données dudit dispositif actif de collecte de données (303) à ladite passerelle autorisée ou à ladite pluralité de passerelles (311-313) sur le canal radio exclusif (201), chacun incluant une partie de données dudit deuxième type de données, en utilisant lesdits composants radio et ledit processus de modulation ; et
la transmission de données de ladite au moins une passerelle (313) à une station de commande (321).

13. Procédé selon la revendication **12,** dans lequel ladite étape d'établissement d'un canal exclusif comprend les étapes suivantes :
l'envoi d'un signal d'autorisation de la station de commande (321) à une passerelle autorisée (313) ;
l'autorisation donnée à la passerelle autorisée (313) de poursuivre la communication avec un dispositif actif de collecte de données (303) ;
la transmission de données d'une passerelle autorisée (313) à un dispositif actif de collecte de données (303) ;
le fait d'ordonner au dispositif actif de collecte de données (303) de rester réceptif à d'autres communications en provenance de la passerelle autorisée (313) ; et
la retransmission de messages de la station de commande (321) au dispositif actif de collecte de données (303) via la passerelle autorisée (313).

14. Procédé selon l'une quelconque des revendications **12** à **13,** dans lequel la vitesse de transmission de paquets de données, contenant des données du deuxième type de données, du deuxième dispositif de collecte de données (303) à la passerelle (313) est ajustée en réponse à une mesure de l'intensité de signal.

15. Procédé selon l'une quelconque des revendications **12-14,** dans lequel le premier type de données concerne des valeurs de données individuelles et lesdites valeurs de données individuelles confirment qu'une quantité prédéfinie d'une marchandise a été consommée, dans lequel ladite marchandise est sélectionnée dans une liste non exhaustive comprenant une unité de gaz, une unité d'électricité et une unité d'eau, et le deuxième type de données concerne une représentation environnementale et est sélectionné dans une liste non exhaustive comprenant un fichier image (photographie) et un enregistrement vidéo.
